# EUROPEAN PATENT APPLICATION

(11) **EP 3 597 497 A1**
(43) Date of publication of application: **22.01.2020**
(21) Application number: 18184172.7
(22) Date of filing: 18.07.2018
(51) Int. Cl.: B60W 10/06, B60W 10/08, B60W 10/188, B60W 10/192, B60W 10/26, B60W 30/14, B60W 30/18

(54) **METHOD FOR CONTROLLING THE SPEED OF A VEHICLE**

(71) Applicant: Continental Teves AG & Co. OHG, 60488 Frankfurt am Main (DE)
(72) Inventor: D Amone, Michele, 60318 Frankfurt am Main (DE); Maggiora, Alberto, 60318 Frankfurt am Main (DE)

(57) **Abstract**

The invention relates to a method for controlling the speed of a vehicle, the method comprising the steps of:
- activating a driving assistance function (S10), said driving assistance function limiting the speed of the vehicle to a maximum speed value, wherein the driving assistance function enables the driver to decrease the speed of the vehicle below said maximum speed value without deactivating the driving assistance function;
- monitoring the speed of the vehicle (S11); and
- automatically lowering the speed of the vehicle if the speed exceeds the maximum speed value (S12).

## Description

The present invention relates to a method and a system for controlling the speed of a vehicle.

Multiple driving assistance functions for vehicles are already known.

First, cruise control functions are known which try to keep the speed of the car at a constant value without actuating the gas pedal by the user. Once the cruise control function is activated, the driver can take the foot of the gas pedal and the car runs at the set speed. However, in case of driving down a hill, the speed of the vehicle may rise above the set speed value. In addition, when activating the brake and/or the clutch, the cruise control function is deactivated.

In the last decade, Adaptive Cruise Control (ACC) systems have been introduced which extend upper-mentiond cruise control functionality by adapting the speed of the car according to the speed of a vehicle driving ahead.

Disadvantageously, even in case of an activation of said known systems, the driver has to look continuously or at least in certain intervals at the speedometer in order to avoid over-speeding. Thus, the driver's attention is not fully directed to the road and traffic.

It is an objective of the embodiments of the invention to provide a method for controlling the speed of a vehicle which supports the driver and increases driving safety. The objective is solved by the features of the independent claims. Preferred embodiments are given in the dependent claims. If not explicitly indicated otherwise, embodiments of the invention can be freely combined with each other.

According to an aspect, the invention refers to a method for controlling the speed of a vehicle. The method comprises the following steps:
At first, a driving assistance function is activated. Said driving assistance function is limiting the speed of the vehicle to a maximum speed value. So in other words, the driving assistance function is a maximum speed limiting function. The driving assistance function enables the driver to decrease the speed of the vehicle below said maximum speed value or to stop the vehicle without deactivating the driving assistance function. So, for example, the driver can initiate a braking action or let the vehicle coast towards a lower driving car without canceling the driving assistance function.

Furthermore, the speed of the vehicle is monitored. Said monitoring may be an automated monitoring process, i.e. the speed monitoring is performed by a system of the vehicle without interaction of the driver. Based on said speed monitoring it is possible to determine whether the maximum speed value is reached or not. It is worth mentioning that the maximum speed value can be freely chosen, for example, by the driver itself or supported by an assistance system (e.g. a camera reading road speed signals). Also an interaction of an assistance system and driver may be feasible, e.g. a maximum speed value may be suggested by an assistance system and may be accepted by the driving assistance function after a confirmation provided by the driver.

If the speed exceeds the maximum speed value, the speed of the vehicle is automatically lowered, i.e. without any driver interaction.

Said method is advantageous because driving security is significantly enhanced. Speed limits can be automatically met without permanently observing the speedometer, thus the driver can permanently give attention to the road and surrounding traffic.

According to an embodiment, the step of automatically lowering the speed includes a braking action using one or more mechanical brakes of the vehicle, a braking action caused by the engine and/or a recuperation braking. A control entity of the vehicle may decide which single action (e.g. recuperation braking) or combination of actions (e.g. recuperation braking combined with mechanical braking) should be used in the respective situation. The term "recuperation braking" may refer to a braking action in which kinetic energy is converted into electric energy, for example, using an electric drive engine or any other electric component which is configured to perform said energy conversion.

According to an embodiment, actuating the brake pedal of the vehicle does not deactivate the driving assistance function. So, the driver is able to lower the speed of the vehicle based on the mechanical brakes but the driving assistance function stays active and may limit the vehicle speed again when accelerating the vehicle to maximum speed value.

According to an embodiment, the power of the engine is decreased if the speed of the vehicle reaches or exceeds said maximum speed value. So, the vehicle speed can be limited by a reduction of the engine power and the engine power is limited such that even when the driver presses the gas pedal more intensively (preferably except full throttle), the vehicle does not increase the speed beyond said maximum speed value.

According to an embodiment, the driving assistance function is deactivated if the driver applies full throttle or deactivates the driving assistance function by an exit routine, e.g. manual deactivation. Thereby it is possible for the driver to deactivate the driving assistance function immediately in order to accelerate the vehicle beyond said maximum speed value. Said deactivation may be necessary, for example, in case of overtaking another vehicle.

According to an embodiment, after applying full throttle, the power of the engine is increased depending on the possibility to provide the power of the engine to the wheels of the vehicle with out causing a loss of traction. Thereby it is possible to avoid dangerous situations caused by a loss of traction when deactivating the driving assistance function by applying full throttle.

According to an embodiment, after applying full throttle, the power of the engine is increased based on a ramp function. For example, said ramp function may be used if a driving assistance system recognizes low grip of the tires of the vehicle. Thereby, a loss of traction can be avoided.

According to an embodiment, the driving assistance function is deactivated if the braking power decreases below a braking power threshold value and/or the temperature of at least one of the brakes of the vehicle rises above a temperature threshold value. In addition, the driving assistance function may be deactivated if a monitoring system detects problems on the brake system, a wheel, a tire and/or any other component vital for the drive assistance function. Thereby, an overload of the braking system caused by an extensive use of the driving assistance function (e.g. when driving a long distance downhill) can be avoided.

According to an embodiment, one or more warnings are provided to the driver before deactivating the driving assistance function. Said warnings may visual, audible and/or haptic warnings (e.g. vibration of the steering wheel). Thereby, the driver is not surprised that the driving assistance function is deactivated and can control the speed of the vehicle by himself.

According to a further aspect, the invention relates to a system for controlling the speed of a vehicle. The system comprises:
- a user interface for activating a driving assistance function, said driving assistance function limiting the speed of the vehicle to a maximum speed value, wherein the driving assistance function is configured to enable the driver to decrease the speed of the vehicle below said maximum speed value without deactivating the driving assistance function;
- a speed detection entity, said speed detection entity being configured to provide information regarding the speed of the vehicle; and
- a control entity configured to automatically initiate a decrease of the speed of the vehicle when the speed exceeds the maximum speed value in case of an activated driving assistance function.

Said system is advantageous because speed limits can be automatically met without permanently observing the speedometer. Thus driving security is significantly enhanced because the driver can permanently give attention to the road and surrounding traffic.

According to an embodiment of the system, the control entity is configured to initiate a braking action using one or more brakes of the vehicle, a braking action caused by the engine and/or a recuperation braking. Said control entity may decide which single action (e.g. recuperation braking) or combination of actions (e.g. recuperation braking combined with mechanical braking) should be used in the respective situation. Thereby an improved maximum speed control of the vehicle is obtained. According to an embodiment of the system, the control entity is configured to initiate a decrease of power of the engine if the speed of the vehicle reaches or exceeds said maximum speed value. Thus, the vehicle speed can be controlled by reducing the engine power. Preferably, the control entity may limit the engine power such that even when the driver presses the gas pedal more intensively (preferably except full throttle), the vehicle does not increase the speed beyond said maximum speed value.

According to an embodiment of the system, the control entity is configured to deactivate the driving assistance function if the driver applies full throttle. So, in other words, full throttle may be detected as an exit trigger for leaving the driving assistance function.

However, preferably, the control entity providing the control of the driving assistance function or (also in combination with) any other control entity of the vehicle may be configured to increase, after applying full throttle or any other deactivation routine of the driving assistance function, the power of the engine depending on the possibility to provide the power of the engine to the wheels of the vehicle without causing a loss of traction. Said increase may be, for example, performed based on a ramp function.

According to an embodiment of the system, the control entity is configured to deactivate the driving assistance function if the braking power decreases below a braking power threshold value and/or the temperature of at least one of the brakes of the vehicle rises above a temperature threshold value. Thereby, an overload of the braking system caused by an extensive use of the driving assistance function (e.g. when driving a long distance downhill) can be avoided.

According to an embodiment, the control entity is configured to initiate the provision of one or more warnings to the driver before deactivating the driving assistance function. Said warnings may visual, audible and/or haptic warnings (e.g. vibration of the steering wheel). Thereby, the driver is not surprised that the driving assistance function is deactivated and can control the speed of the vehicle by himself.

Furthermore, the invention relates to a vehicle comprising a system according to upper-mentioned embodiments.

The term "vehicle" as used in the present disclosure may refer to a car, truck, bus, train, e-bike or any other crafts.

The term "essentially" or "approximately" as used in the invention means deviations from the exact value by +/- 10%, preferably by +/- 5% and/or deviations in the form of changes that are insignificant for the function and/or for the traffic laws.

The various aspects of the invention, including its particular features and advantages, will be readily understood from the following detailed description and the accompanying drawings, in which:
Fig. 1 illustrates steps of a method for controlling the speed of a vehicle; and
Fig. 2 illustrates in the upper half a speed curve over time and in the lower half a graph illustrating the activation/deactivation of the driving assistance function.

The present invention will now be described more fully with reference to the accompanying drawings, in which example embodiments are shown. The embodiments in the figures may relate to preferred embodiments, while all elements and features described in connection with embodiments may be used, as far as appropriate, in combination with any other embodiment and feature as discussed herein, in particular related to any other embodiment discussed further above. However, this invention should not be construed as limited to the embodiments set forth herein. Throughout the following description similar reference numerals have been used to denote similar elements, parts, items or features, when applicable.

The features of the present invention disclosed in the specification, the claims, examples and/or the figures may both separately and in any combination thereof be material for realizing the invention in various forms thereof.

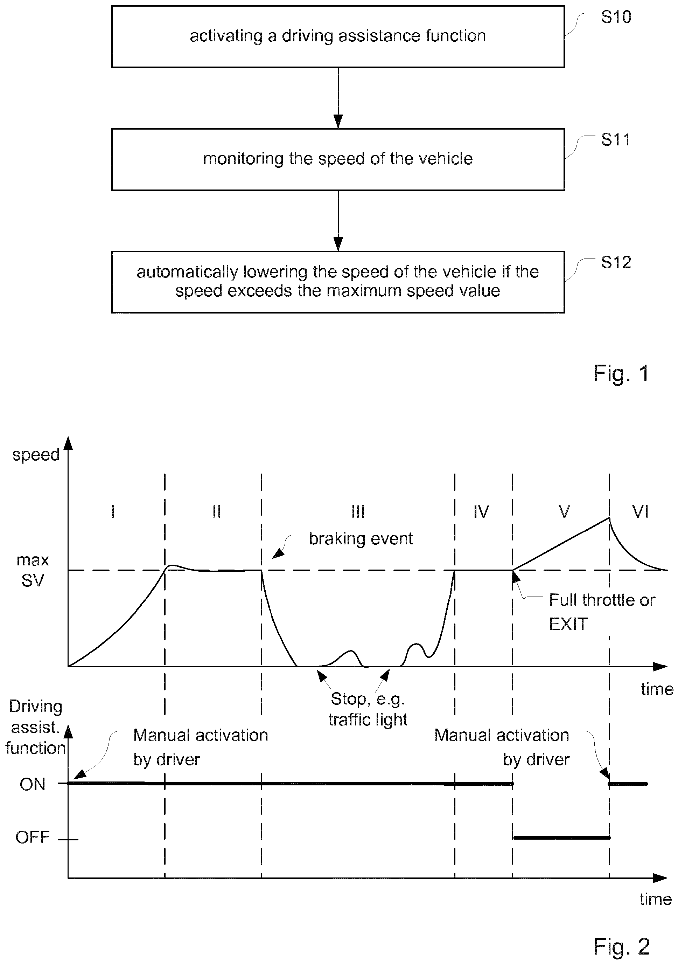

Fig. 1 shows a schematic diagram for illustrating steps of a method for controlling the speed of a vehicle using a driving assistance function. Said driving assistance function is configured to control the speed of the vehicle such that the vehicle can not exceed a maximum speed value. Said maximum speed value can be set by the driver manually via a user interface or may be provided by a speed limit recognition system of the vehicle.

Said driving assistance function may be configured such that - in case of an activated driving assistance function - the driver can drive with the vehicle at any speed equal, respectively, lower than said maximum speed value but not at a speed above the maximum speed value. So, in contrast to a cruise control function, the speed should not be fixed at a certain speed value but the driving assistance function may provide an upper boundary for the speed. So, also after initiating a braking action or a costing phase, the driving assistance function is still activated and the vehicle can only be accelerated until the maximum speed value is reached because the driving assistance function is not deactivated by pressing the brake and/or clutch pedal.

In order to enable said maximum speed limiting function, the driving assistance function may be activated (S10) using a user interface included in the vehicle. Said user interface may be a control switch, a graphical interface (e.g. touch screen), a voice control system or any combinations thereof. During activation, a maximum speed value is defined. Said maximum speed value may be a value provided by the driver, the current speed value of the vehicle, a value provided by the speed limit recognition system of the vehicle or a speed value which has already been used before. Preferably, said maximum speed value can be changed by the driver or by the system managing the vehicle speed. Specifically, said change of maximum speed value can be performed with the driving assistance function being activated or deactivated.

The dactivation of the driving assistance function may also be performed using said user interface and/or the gas pedal by applying full throttle.

After activation, the speed of the vehicle is monitored (S11). A speed value may be provided by a speed detection entity, for example, a speed sensor or an entity coupled with a speed sensor. By monitoring the speed of the vehicle, it can be determined whether the current speed of the vehicle is equal/below the maximum speed value or not. If so, the driver may run the vehicle as usual. However, when the speed of the vehicle rises above the given maximum speed value, the vehicle is automatically decelerated as long as the speed is lower than the maximum speed value (S12).

Said decelerating may be obtained by an automatic braking action of the vehicle wherein at least some or all brakes are activated. Alternatively or in addition, said decelerating may be obtained by lowering the power of the engine and/or using recuperation scheme of an electric drive.

So, in case that said driving assistance function is activated, the vehicle may run at a speed equal to or lower than the maximum speed value wherein even in case of an accelerating action (preferably excluding full throttle) the maximum speed value can not be crossed because the power of the engine is decreased when maximum speed value is reached.

Similarly, when the vehicle moves downhill, the driving assistance function ensures that the vehicle does not run faster than the maximum speed value by decreasing motor power, using motor brake, using recuperation scheme of an electric drive and/or mechanical brakes of the vehicle.

Fig. 2 illustrates an example speed curve over time and a graph indicating the activation state of the driving assistance function over time. The illustrated time period is segmented in multiple time windows which are numbered by numerals I - VI. As illustrated by the lower graph, the driving assistance function stays activated in time windows I - IV, is deactivated in time period V and is manually reactivated in time period VI.

In time window I, the driver activates driving assistance function and the vehicle is accelerated until maximum speed value (max SV) is reached. In time window II, the vehicle drives with a speed according to maximum speed value (apart from a slight overshoot). In time window II, said driving assistance function limits the speed, i.e. the gas pedal position may lead to a higher vehicle speed but the speed is limited to maximum speed value by means of said driving assistance function.

At the transition from time window II to time window III, the user activates the brakes in order to reduce velocity. However, said braking event does not lead to a deactivation of the driving assistance function. During time window III, the driver varies the speed of the vehicle (e.g. by accelerating, stopping and coasting) but the driving assistance function stays activated. Similarly, also a disengaging the clutch of the vehicle does not lead to a deactivation of the driving assistance function.

At the transition from time window III to time window IV, the user accelerates the vehicle again. Therefore, after reaching maximum speed value, the speed is limited to said maximum speed value (similar to time window II).

In order to allow the user to accelerate the vehicle immediately above maximum speed value, the driving assistance function may be deactivated when the driver applies full throttle or uses another exit routine. For example, for overtaking another vehicle (or in an emergency situation), the driver may kick down the gas pedal thereby avoiding that the driving assistance function limits the speed during the overtaking procedure (or in an emergency situation).

Said deactivation by applying full throttle is shown in time window V. When driver applies full throttle, the vehicle can be accelerated above maximum speed value.

In time window VI, the driving assistance function is activated once again, e.g. by a manual user input or based on a voice command. As a reaction, the velocity of the vehicle is reduced.

In order to avoid that the vehicle looses traction when applying full throttle (e.g. in case of snow or ice on the street), the power applied by the engine to the wheels may be controlled according to the traction of wheels. For example a control system of the vehicle, for example, traction control system (TCS) or Electronic Stability Control (ESC) system may control the power of the engine such that no loss of traction occurs. For example, the power of the engine may be increased according to a ramp function in order to avoid an abrupt increase of power. Also combinations with other sensors included in the vehicle (e.g. rain sensor, sensor for detecting snow/ice etc.) are feasible. Thereby, deactivation of driving assistance function does not lead to a sudden increase of power in case of bad traction conditions.

Furthermore, the system providing the driving assistance function may include safety functionality in order to avoid mechanical and thermal stress of the braking system. For example, in case of driving down a pass road for a long time and having the driving assistance function activated, there is a risk of overheating the brakes. Thus, the driving assistance function may be adapted to protect the braking system by providing hints to the driver how to react, e.g. engaging a lower gear in order to increase the braking effect of the engine. The basis for said warnings may be one or more temperature values of one or more brakes of the vehicle. The temperature of the brakes may be monitored based on temperature sensors arranged at or close to the brakes.

In case that the temperature of the brakes rises above a certain threshold, the driving assistance function may be deactivated after one or more warnings indicating said deactivation have been provided to the driver. Said warnings may be audible, visible or haptic information.

It should be noted that the description and drawings merely illustrate the principles of the proposed invention. Those skilled in the art will be able to implement various arrangements that, although not explicitly described or shown herein, embody the principles of the invention.

### List of reference numerals

- S10 -S12: steps
- I - VI: time windows

## Claims

1. Method for controlling the speed of a vehicle, the method comprising the steps of:
- activating a driving assistance function (S10), said driving assistance function limiting the speed of the vehicle to a maximum speed value, wherein the driving assistance function enables the driver to decrease the speed of the vehicle below said maximum speed value without deactivating the driving assistance function;
- monitoring the speed of the vehicle (S11); and
- automatically lowering the speed of the vehicle if the speed exceeds the maximum speed value (S12).

2. Method according to claim 1, wherein the step of automatically lowering the speed includes a braking action using one or more brakes of the vehicle, a braking action caused by the engine and/or a recuperation braking.

3. Method according to claim 1 or 2, wherein actuating the brake pedal or clutch pedal does not deactivate the driving assistance function.

4. Method according to anyone of the preceding claims, wherein the power of the engine is decreased if the speed of the vehicle reaches or exceeds said maximum speed value.

5. Method according to anyone of the preceding claims, wherein the driving assistance function is deactivated if the driver applies full throttle or performs a manual deactivation routine.

6. Method according to claim 5, wherein, after applying full throttle, the power of the engine is increased depending on an acceleration request and on the possibility to provide the power of the engine to the wheels of the vehicle without causing a loss of traction.

7. Method according to claim 6, wherein, after applying full throttle, the power of the engine is increased based on a ramp function.

8. Method according to anyone of the preceding claims, wherein the driving assistance function is deactivated if the braking power decreases below a braking power threshold value, the temperature of at least one of the brakes of the vehicle rises above a temperature threshold value and/or a monitoring system detects problems on any vehicle component vital for the drive assistance function.

9. Method according to claim 8, wherein one or more warnings and/or hints are provided to the driver before deactivating the driving assistance function.

10. Method according to anyone of the preceding claims, wherein said maximum speed value is provided by an assistance system.

11. System for controlling the speed of a vehicle, the system comprising:
- a user interface for activating a driving assistance function, said driving assistance function limiting the speed of the vehicle to a maximum speed value, wherein the driving assistance function is configured to enable the driver to decrease the speed of the vehicle below said maximum speed value without deactivating the driving assistance function;
- a speed detection entity, said speed detection entity being configured to provide information regarding the speed of the vehicle; and
- a control entity configured to automatically initiate a decrease of the speed of the vehicle when the speed exceeds the maximum speed value in case of an activated driving assistance function.

12. System according to claim 11, wherein the control entity is configured to initiate a braking action using one or more brakes of the vehicle, a braking action caused by the engine and/or a recuperation braking.

13. System according to claim 11 or 12, wherein the control entity is configured to initiate a decrease of power of the engine if the speed of the vehicle reaches or exceeds said maximum speed value.

14. System according to anyone of claims 11 to 13, wherein the control entity is configured to deactivate the driving assistance function if the driver applies full throttle or a manual deactivation command is provided.

15. System according to anyone of claims 11 to 14, wherein the control entity is configured to deactivate the driving assistance function if the braking power decreases below a braking power threshold value and/or the temperature of at least one of the brakes of the vehicle rises above a temperature threshold value.

16. Vehicle comprising a system according to anyone of the claims 11 to 15.
